# EUROPÄISCHE PATENTSCHRIFT

(11) **EP 1 129 300 B1**
(45) Veröffentlichungstag und Bekanntmachung des Hinweises auf die Patenterteilung: **25.09.2002**
(21) Anmeldenummer: 99957293.6
(22) Anmeldetag: 09.11.1999
(51) Int. Cl.: F16C 33/20

(54) **GEROLLTE GLEITLAGERBUCHSE**
ROLLED-UP PLAIN BEARING BUSH
COUSSINET LISSE ENROULE

(30) Priorität: 10.11.1998 DE 19851759
(43) Veröffentlichungstag der Anmeldung: 05.09.2001
(73) Patentinhaber: KS Gleitlager GmbH, 68789 St. Leon-Rot (DE)
(72) Erfinder: SCHUBERT, Werner, D-69168 Wiesloch (DE); BECKER, Karl, D-68789 St. Leon-Rot (DE)
(74) Vertreter: Dreiss, Fuhlendorf, Steimle & Becker
(86) Internationale Anmeldenummer: EP9908570
(87) Internationale Veröffentlichungsnummer: WO00028226

(56) Entgegenhaltungen:
- EP-A- 0 040 448
- EP-A- 0 193 214
- DE-A- 1 575 641
- DE-A- 3 601 568
- DE-A- 3 736 292
- GB-A- 1 592 341
- US-A- 5 364 682
- PATENT ABSTRACTS OF JAPAN vol. 1998, no. 06, 30. April 1998 (1998-04-30) & JP 10 037963 A (OILES IND CO LTD), 13. Februar 1998 (1998-02-13)

## Beschreibung

Die Erfindung betrifft eine gerollte Gleitlagerbuchse aus einem Metall/Kunststoff-Verbundgleitlagerwerkstoff mit einer Wanddicke von wenigstens 0,75 mm, die in eine Lageröffnung zur Ausbildung eines Festsitzes einpressbar ist, mit einer metallischen Trägerschicht und einer Gleitschicht.

Derartige Lagerbuchsen sind bspw. aus der GB 15 92 341 bekannt und werden seit langer Zeit von der Anmelderin unter dem Handelsnamen PERMAGLIDE P10 vertrieben. Diese Lagerbuchsen haben einen Stahlrücken und eine darauf porös aufgesinterte Bronzeschicht. In die porös aufgesinterte Bronzeschicht ist ein Gemisch aus 80 Vol.-% PTFE und 20 Vol.-% Blei als Gleitschicht eingebracht, wobei diese Gleitschicht dicker ist als die poröse Bronzeschicht und diese somit vollständig überdeckt.

Auf diese Weise hergestellte gerollte Buchsen, deren Zusammensetzung der Gleitschicht auch in verschiedener Weise weiterentwickelt wurde, erfüllen die Anforderungen an die tribologischen Eigenschaften eines Gleitlagerelements in höchstem Maße. Es hat sich jedoch gezeigt, dass im Besonderen beim Einsatz in Kraftfahrzeugen und des auf diesem Gebiet bestehenden Strebens nach Gewichtsreduzierung, sich das Gewicht einer großen Anzahl von Gleitlagerbuchsen in der Summe nachteilig auswirkt. Ein weiterer Nachteil der bekannten Buchsen wird darin gesehen, dass besonders im Winterbetrieb, wenn das Kraftfahrzeug korrosiv wirkenden Medien, wie Streusalz, ausgesetzt ist, der Stahlrücken der Gleitlagerbuchsen korrodiert.

Eine gattungsgemäße Lagerbuchse ist auch aus JP-A-61-13025 bekannt. Sie umfasst einen Stahlrücken, eine dünne gelochte Platte, die vollständig mit einem Binde- oder Haftmittel beschichtet ist, das auch PFA enthalten kann. Auf die Lochplatte und in die Öffnungen der Lochplatte ist ein Kunststoffgleitmaterial mit Füllstoffen einimprägniert. Die Haftung des Kunststoffgleitmaterials auf dem Lochblech ist problematisch, weshalb das Binde- oder Haftmittel verwendet werden muß. Dies ist aufwendig.

Der vorliegenden Erfindung liegt die Aufgabe zugrunde, die vorstehend beschriebenen Nachteile, insbesondere hohes Gewicht, Korrosion, schlechte Haftung des Kunststoffgleitmaterials, zu vermeiden.

Diese Aufgabe wird durch eine Gleitlagerbuchse der eingangs genannten Art gelöst, die dadurch gekennzeichnet ist, dass die metallische Trägerschicht aus Aluminiumlegierung besteht und die Gleitschicht aus einem aus Aluminiumlegierung bestehenden Streckgitterbandabschnitt und einem auf den Streckgitterbandabschnitt und in die Öffnungen des Steckgitterbandabschnitts eingebrachten Gemisch aus einem Kunststoffgleitmaterial und gegebenenfalls aus die Wärmeleitfähigkeit und die tribologischen Eigenschaften verbessernden Füllstoffen besteht, und dadurch dass die Gleitschicht und die Trägerschicht mittels einer zusätzlichen, zwischen ihnen angeordneten PFA-Schicht verklebt sind.

Die Gleitlagerbuchse weist eine solche Wanddicke auf, dass sie zur Ausbildung eines Festsitzes in eine Lageröffnung einpressbar und im Betrieb in der Lageröffnung unverschieblich und unverdrehbar aufgenommen ist. Die erfindungsgemäße Gleitlagerbuchse zeichnet sich durch ein außergewöhnlich geringes Gewicht aus. Dadurch, dass die metallische Trägerschicht aus Aluminiumlegierung, vorzugsweise aus höherfester, seewasserbeständiger Aluminiumlegierung, vorzugsweise aus Aluminiumknetlegierung gebildet ist, ergeben sich keine Probleme im Hinblick auf eine Korrosion der Trägerschicht mehr.

Ausgehend von dem eingangs genannten bekannten Stahl/Kunststoff-Verbundgleitlagerwerkstoff wäre es nicht möglich gewesen, die Stahlträgerschicht durch eine Aluminiumträgerschicht zu ersetzen, da Aluminium bei den Sintertemperaturen der porösen Bronzeschicht sich verflüssigen würde.

Dadurch, dass die Gleitschicht einen Abschnitt eines Aluminium-Streckgitterbands mit Hinterschnitten in Dickenrichtung umfasst, haftet das Gemisch aus Kunststoffgleitmaterial und Füllstoffen ausgezeichnet, ohne dass ein Haftvermittler verwendet werden müsste. Ablöseerscheinungen treten nicht auf.

Aus der EP 0 193 214 B1 war zwar bereits ein folienartiger Gleitlagerwerkstoff bekannt, bestehend aus einem Streckgitterband, das mit einem Gemisch aus Kunststoffgleitmaterial und Füllstoffen beschichtet wurde. Dieser folienartige Gleitlagerwerkstoff war jedoch nur zur Herstellung von Buchsen für verhältnismäßig geringe Beanspruchung und mit einer Dicke von 0,5 mm und darunter geeignet.

Von der Firma Norton-Pampus wurde bereits der Vorschlag gemacht, eine PTFE-Folie auf einen Stahlrücken aufzubringen. Hierdurch wird jedoch die Aufgabe, die der vorliegenden Erfindung zugrunde liegt, nicht gelöst.

Mit der vorliegenden Erfindung wurde erkannt, dass durch den Verbund aus einer aus Aluminiumlegierung bestehenden Trägerschicht und einer Gleitschicht der beschriebenen Zusammensetzung, die mittels einer zwischen ihnen angeordneten PFA-Schicht miteinander verklebt sind, eine zur Ausbildung eines Festsitzes geeignete Gleitlagerbuchse hergestellt werden kann, die sich zudem durch ein äußerst geringes Gewicht auszeichnet und im Hinblick auf Korrosionserscheinungen sich als weit unproblematischer erweist als Stahl/Kunststoff-Verbundgleitlagerwerkstoffe.

In bevorzugter Ausbildung umfasst das auf Kunststoffbasis bestehende Gemisch 30 bis 90 Vol.-%, vorzugsweise 40 bis 80 Vol.-% PTFE als Kunststoffgleitmaterial. Neben PTFE können aber auch weitere Kunststoffkomponenten, wie z.B. PFA, PVDF vorgesehen sein. Das Gemisch kann desweiteren zu 10 bis 60 Vol.-% einen Füllstoff umfassen. Es hat sich als besonders vorteilhaft erwiesen, wenn das Gemisch zu 10 bis 30 Vol.-% einen metallischen Füllstoff, vorzugsweise in Form von Blei, umfasst. 10 bis 30 Vol.-% des Gemischs können auch von einem faserigen Füllstoff gebildet sein.

Als besonders vorteilhaft erweist sich das niedrige Flächengewicht des die Buchse bildenden Metall/Kunststoff-Verbundgleitlagerwerkstoffs, welches bei einer Wanddicke von 0,75 mm bis 3,0 mm zwischen 0,19 und 0,77 g/cm² liegt.

Weitere Einzelheiten, Merkmale und Vorteile der Erfindung ergeben sich aus der zeichnerischen Darstellung und nachfolgenden Beschreibung von Bestandteilen und Herstellverfahren einer erfindungsgemäßen gerollten Gleitlagerbuchse. In der Zeichnung zeigt:
- Figur 1: eine Draufsicht auf ein Streckgitterband zur Herstellung der erfindungsgemäßen Gleitlagerbuchse;
- Figur 2: eine Schnittansicht des Streckgitterbands nach Figur 1 gesehen in Richtung der Pfeile II-II;
- Figur 3: eine schematische Schnittansicht einer Gleitschicht;
- Figur 4: eine schematische Schnittansicht eines Verbundgleitlagerstoffs mit der Gleitschicht nach Figur 3;
- Figur 5: eine perspektivische Darstellung einer erfindungsgemäßen gerollten Gleitlagerbuchse.

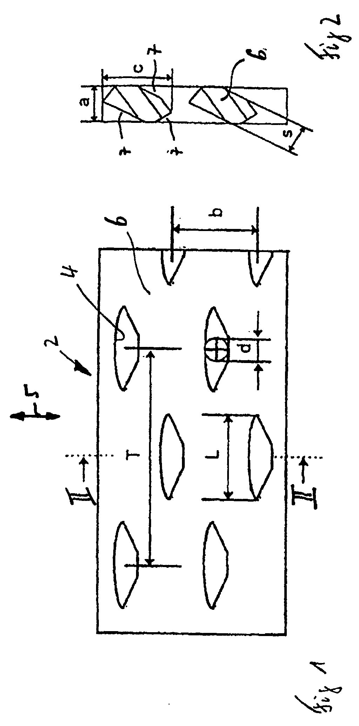

Figuren 1 und 2 zeigen eine Draufsicht auf ein Streckgitterband 2 oder Streckmetallgitterband, welches bevorzugtermaßen zur nachfolgend beschriebenen Herstellung einer erfindungsgemäßen Gleitlagerbuchse verwendet wird.

Das Streckgitterband 2 ist aus AlMg3-Legierung gebildet und umfasst regelmäßig angeordnete Öffnungen 4, die durch Stanzschnitte und "Strecken" des Bands in Richtung des Pfeils 5 durch Ausüben einer Zugkraft hergestellt sind. Die Struktur des Streckgitterbands 2 bzw. der das Band bildenden Stege 6, welche die Öffnungen 4 begrenzen, ergibt sich aus Figur 2. Bevorzugte Abmessungen ergeben sich aus der nachfolgenden Tabelle.

| | | |
|---|---|---|
| Plastische Höhe | a | 0,46 bis 0,50 mm |
| Maschenbreite | b | 1,17 ± 0,05 mm |
| Stegbreite | c | ≥ 0,40 mm |
| Lochlehrenmaß | d | 0,25 ± 0,05 mm |
| Stegdicke | s | 0,45 ± 0,10 mm |
| Maschenlänge | L | 0,90 ± 0,10 mm |
| Maschenteilung | T | 2,00 ± 0,05 mm |

Das Streckgitterband 2 weist in Dickenrichtung (a) Hinterschneidungen 7 auf, die eine ausgezeichnete Verklammerung eines einimprägnierten Kunststoffgleitmaterials bewirken.

Figur 3 zeigt eine schematische Schnittdarstellung einer insgesamt mit dem Bezugszeichen 8 bezeichneten Gleitschicht zur Herstellung einer erfindungsgemäßen gerollten Buchse. Die Gleitschicht 8 ist gebildet aus dem Streckgitterband 2, welches mit einer Mischung 10 aus einem Kunststoffgleitmaterial 12 und Füllstoffen 14 derart "gefüllt" ist, dass die Mischung die Öffnungen 4 des Streckgitterbands 2 vollständig ausfüllt und wenigstens zur Gleitseite hin einen Überstand über das Streckgitterband 2 bildet. Durch die Hinterschneidungen 7 ist das Kunststoffgleitmaterial 12 an dem Streckgitterband 2 gehalten, ohne dass es im Betrieb zu Ablöseerscheinungen kommt.

Zur Herstellung des Metall/Kunststoff-Verbundgleitlagerwerkstoffs wird die Gleitschicht 8 mittels einer verhältnismäßig dünnen PFA-Schicht 16 auf eine Trägerschicht 18 aus Aluminiumlegierung, vorzugsweise aus Aluminiumknetlegierung, durch Anschmelzen der PFA-Schicht bei Temperaturen zwischen 360 und 380° aufgeklebt. Dies erfolgt vorzugsweise durch eine Doppelwandpresse, bei der die drei Schichten zwischen zwei über Anpressrollen laufenden endlosen Stahlbändern hindurchlaufen, die eine Heizeinrichtung zum Erwärmen des Verbunds auf wenigstens 360 °C umfasst.

Figur 4 zeigt eine schematische Schnittansicht des so erhaltenen Verbundgleitlagerwerkstoffs 20.

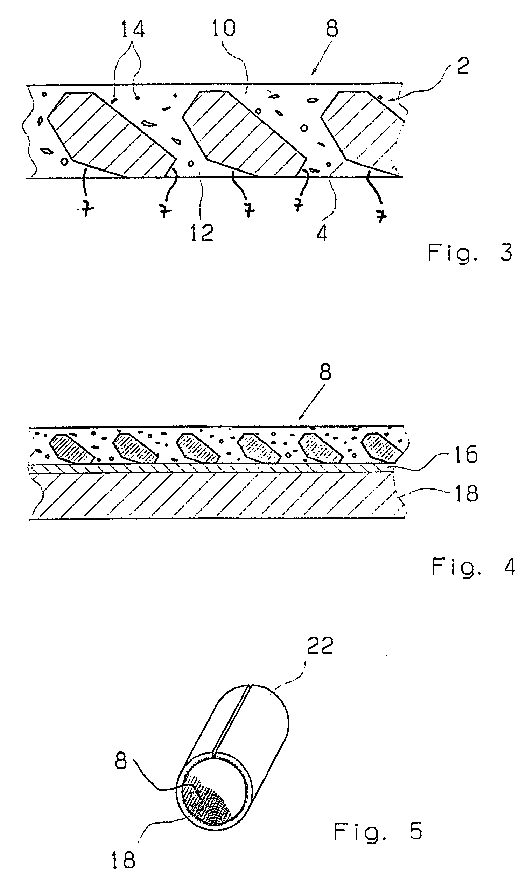

Schließlich zeigt Figur 5 eine schematische Darstellung einer gerollten Buchse 22 aus dem Verbundgleitlagerwerkstoff 20 nach Figur 4.

Es wurden ferner Vergleichsmessungen des Flächengewichts eines bekannten Verbundgleitlagerwerkstoffs und des erfindungsgemäßen Verbundgleitlagerwerkstoffs durchgeführt. Bei dem bekannten Verbundgleitlagerwerkstoff handelt es sich um den eingangs geschilderten Werkstoff Permaglide P10, der aus einem 0,73 mm dicken Stahlrücken und einer darauf aufgebrachten 0,25 mm dicken porösen Bleibronze und einer Kunststoffgleitschicht aus PTFE besteht, welche die Bleibronze um 0,02 mm überdeckt, so dass die Werkstoffdicke insgesamt 1 mm beträgt. Der erfindungsgemäße Werkstoff hingegen umfasst eine 0,55 mm dicke AlMg3-Trägerschicht. Die darauf aufgebrachte Gleitschicht ist gebildet aus einem 0,40 mm dicken Streckgitter, dessen Kunststofffüllung einen 0,05 mm dicken Überstand auf der dem Gleitpartner zugewandten Seite aufweist. Der Gleitlagerwerkstoff umfasst also ebenfalls eine Dicke von 1,0 mm. Das Flächengewicht des bekannten Gleitlagerwerkstoffs ist mit 0,76 g/cm² nahezu dreimal so groß wie diejenige des erfindungsgemäßen Gleitlagerwerkstoffs mit 0,27 g/cm³.

| Vergleichsmesung | "Flächengewicht" |
|---|---|
| P10, Dicke 1,0 mm | 0,76 g/cm² |
| neuer Werkstoff, Dicke 1,0 mm | 0,27 g/cm³. |

## Patentansprüche

1. Gerollte Gleitlagerbuchse aus einem Metall/Kunststoff-Verbundgleitlagerwerkstoff mit einer Wanddicke von wenigstens 0,75 mm, die in eine Lageröffnung zur Ausbildung eines Festsitzes einpressbar ist, mit einer metallischen Trägerschicht (18) und einer Gleitschicht (8), **dadurch gekennzeichnet, dass** die metallische Trägerschicht (18) aus Aluminiumlegierung besteht und die Gleitschicht (8) aus einem aus Aluminiumlegierung bestehenden Streckgitterbandabschnitt (2) und einem auf den Streckgitterbandabschnitt (2) und in die Öffnungen (4) des Steckgitterbandabschnitts (2) eingebrachten Gemisch (10) aus einem Kunststoffgleitmaterial (12) und gegebenenfalls aus die Wärmeleitfähigkeit und die tribologischen Eigenschaften verbessernden Füllstoffen (14) besteht, und dadurch dass die Gleitschicht (8) und die Trägerschicht (18) mittels einer zusätzlichen, zwischen ihnen angeordneten PFA-Schicht (16) verklebt sind.

2. Gerollte Buchse nach Anspruch 1, **dadurch gekennzeichnet, dass** das Gemisch (10) 30-90 Vol.-% PTFE als Kunststoffgleitmaterial (12) umfasst.

3. Gerollte Buchse nach Anspruch 2, **dadurch gekennzeichnet, dass** das Gemisch (10) zu 10-60 Vol.-% Füllstoff (14) umfasst.

4. Gerollte Buchse nach Anspruch 3, **dadurch gekennzeichnet, dass** das Gemisch (10) zu 10-30 Vol.-% einen metallischen Füllstoff (14) umfasst.

5. Gerollte Buchse nach Anspruch 4, **dadurch gekennzeichnet, dass** der metallische Füllstoff (14) Blei ist.

6. Gerollte Buchse nach einem der Ansprüche 3, 4 oder 5, **dadurch gekennzeichnet, dass** das Gemisch (10) zu 10-30 Vol.-% einen faserigen Füllstoff umfasst.

7. Gerollte Buchse nach einem oder mehreren der vorstehenden Ansprüche, **dadurch gekennzeichnet, dass** das Flächengewicht des die Buchse bildenden Metall/Kunststoff-Verbundgleitlagerwerkstoffs bei einer Wanddicke von 0,75 mm bis 3,0 mm 0,19 g/cm² bis 0,77 g/cm² beträgt.

8. Gerollte Buchse nach einem oder mehreren der vorstehenden Ansprüche, **dadurch gekennzeichnet, dass** die Dicke der Trägerschicht (18) 0,4 bis 0,6 mm beträgt.

## Claims

1. A wrapped plain bearing bush made from a metal/plastics multilayer plain bearing material having a wall thickness of at least 0.75 mm, which may be pressed into a bearing opening to produce an interference fit, having a metal supporting layer (18) and a sliding layer (8), **characterised in that** the metal supporting layer (18) is made from an aluminium alloy and the sliding layer (8) is made from an expanded metal strip portion (2), comprising an aluminium alloy, and a mixture (10) of a plastics sliding material (12) and possibly filling materials (14) which improve the thermal conductivity and the tribological properties, said mixture being introduced onto the expanded metal strip portion (2) and into the openings (4) of the expanded metal strip portion (2), and **in that** the sliding layer (8) and the supporting layer (18) are bonded by means of an additional PFA layer (16) arranged between them.

2. A wrapped bush according to Claim 1, **characterised in that** the mixture (10) contains 30-90 vol.-% PTFE as the plastics sliding material (12).

3. A wrapped bush according to Claim 2, **characterised in that** the mixture (10) contains 10-60 vol.-% filling material (14).

4. A wrapped bush according to Claim 3, **characterised in that** the mixture (10) contains 10-30 vol.-% of a metal filling material (14).

5. A wrapped bush according to Claim 4, **characterised in that** the metal filling material (14) is lead.

6. A wrapped bush according to one of Claims 3, 4, or 5, **characterised in that** the mixture (10) contains 10-30 vol.-% of a fibrous filling material.

7. A wrapped bush according to one or more of the preceding claims, **characterised in that**, with a wall thickness of 0.75 mm to 3.0 mm, the mass per unit area of the metal/plastics multilayer plain bearing material from which the bush is formed is 0.19 g/cm² to 0.77 g/cm².

8. A wrapped bush according to one or more of the preceding claims, **characterised in that** the thickness of the supporting layer (18) is 0.4 to 0.6 mm.

## Revendications

1. Coussinet lisse enroulé en matériau composite métalloplastique pour palier lisse avec une épaisseur de paroi supérieure ou égale à 0,75 mm et emmanchable à force dans une ouverture de palier pour obtenir un ajustement serré, comprenant une couche support métallique (18) et une couche de glissement (8), **caractérisé en ce que** la couche support métallique (18) est en alliage d'aluminium, **en ce que** la couche de glissement (8) consiste en une portion de bande de métal déployé (2) en alliage d'aluminium et en un mélange (10) d'un matériau synthétique de glissement (12) et éventuellement de charges (14) améliorant la conductibilité thermique et les propriétés tribologiques, rapporté sur la portion de bande de métal déployé (2) et dans les ouvertures (4) de la portion de bande de métal déployé (2), et **en ce que** la couche de glissement (8) et la couche support (18) sont collées au moyen d'une couche supplémentaire de PFA (16) intercalée entre lesdites couches.

2. Coussinet enroulé selon la revendication 1, **caractérisé en ce que** le mélange (10) contient 30 à 90 % en volume de PTFE en tant que matériau synthétique de glissement (12).

3. Coussinet enroulé selon la revendication 2, **caractérisé en ce que** le mélange (10) contient 10 à 60 % en volume de charge (14).

4. Coussinet enroulé selon la revendication 3, **caractérisé en ce que** le mélange (10) contient 10 à 30 % en volume d'une charge métallique (14).

5. Coussinet enroulé selon la revendication 4, **caractérisé en ce que** la charge métallique (14) est du plomb.

6. Coussinet enroulé selon l'une des revendications 3, 4 ou 5, **caractérisé en ce que** le mélange (10) contient 10 à 30 % en volume d'une charge fibreuse.

7. Coussinet enroulé selon l'une au moins des revendications précédentes, **caractérisé en ce que** la masse surfacique du matériau composite métalloplastique pour palier lisse formant le coussinet est comprise entre 0,19 et 0,77 g/cm² pour une épaisseur de paroi comprise entre 0,75 mm et 3,0 mm.

8. Coussinet enroulé selon l'une au moins des revendications précédentes, **caractérisé en ce que** l'épaisseur de la couche support (18) est comprise entre 0,4 et 0,6 mm.
